(19) Europäisches Patentamt
European Patent Office
Office européen des brevets

(11) EP 1 658 346 B1

(12) # EUROPÄISCHE PATENTSCHRIFT

(45) Veröffentlichungstag und Bekanntmachung des Hinweises auf die Patenterteilung:
**15.04.2009 Patentblatt 2009/16**

(21) Anmeldenummer: **04764329.1**

(22) Anmeldetag: **20.08.2004**

(51) Int Cl.:
***C09J 7/00*** *(2006.01)* ***C09J 7/02*** *(2006.01)*
***G06K 19/077*** *(2006.01)*

(86) Internationale Anmeldenummer:
**PCT/EP2004/009345**

(87) Internationale Veröffentlichungsnummer:
**WO 2005/021671 (10.03.2005 Gazette 2005/10)**

(54) **VERWENDUNG EINER KLEBSTOFFFOLIE ZUR IMPLANTIERUNG VON ELEKTRISCHEN MODULEN IN EINEN KARTENKÖRPER**

USE OF AN ADHESIVE FILM FOR IMPLANTING ELECTRIC MODULES INTO A CARD BODY

UTILISATION D'UN FILM ADHESIF POUR IMPLANTER DES MODULES ELECTRIQUES DANS UN CORPS DE CARTE

(84) Benannte Vertragsstaaten:
**DE ES FR GB IT**

(30) Priorität: **22.08.2003 DE 10339199**

(43) Veröffentlichungstag der Anmeldung:
**24.05.2006 Patentblatt 2006/21**

(73) Patentinhaber: **tesa AG**
**20253 Hamburg (DE)**

(72) Erfinder:
- **BARGMANN, Renke**
  **22527 Hamburg (DE)**
- **HUSEMANN, Marc**
  **22605 Hamburg (DE)**

(74) Vertreter: **Heins, Matthias**
**tesa AG**
**Quickbornstraße 24**
**20253 Hamburg (DE)**

(56) Entgegenhaltungen:
**EP-A- 0 842 995** **US-B1- 6 210 522**
**US-B1- 6 565 969**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 658 346 B1

Printed by Jouve, 75001 PARIS (FR)

## Beschreibung

Die Erfindung betrifft die Verwendung einer Klebefolie zum Verkleben von elektrischen Modulen ("Chips") in Kartenkörpern.

Zur Implantierung von elektrischen Modulen in Kartenkörpern sind im Stand der Technik bereits eine Vielzahl von Klebstofffolien oder Fügeverfahren bekannt. Ziel dieser Implantierungen ist die Herstellung von Telefonkarten, Kreditkarten, Parkautomatkarten, Versicherungskarten, etc. Beispiele für die entsprechenden Verklebungsverfahren finden sich z.B. in den Patentschriften EP 0 842 995, EP 1 078 965 und DE 199 48 560.

In diesem Bereich der Verklebung steigen aber kontinuierlich die Anforderungen an das Klebesystem. So muss der Kleber eine gute Haftung auf Polycarbonat, auf ABS, PVC und PET aufweisen, aber ebenso eine gute Haftung zum elektrischen Modul. Hier wird in der Regel auf Epoxy-Materialien oder Polyimid verklebt. Früher wurden Cyan-Acrylate als Flüssigkleber eingesetzt, die den Vorteil aufwiesen, dass eine optimale Benetzung des Kartenkörpers sowie des elektrischen Chips erzielt wurde. Diese Technologie ist aber im Aussterben begriffen, da die Prozesse sehr langsam waren. Das Lösemittel verdampfte nur langsam aus der Cavität des Kartenkörpers, die Spritzen zur Dosierung verstopften beim Stillstand durch Austrocknen und waren zudem schlecht dosierbar und der Flüssigkleber benötigte ebenfalls eine gewisse Zeit zum Aushärten. Als Resultat war die Qualität der Verklebung recht schlecht.

Hier zeigen sich die Schmelzhaftkleber den Flüssigklebern deutlich überlegen. Dennoch ist die Auswahl an geeigneten Verbindungen auch hier sehr eingeschränkt, da sehr hohe Anforderungen an diese Fügetechnik gestellt werden. Eine Einschränkung sind die sehr unterschiedlichen Materialien, die verklebt werden müssen. Durch die sehr unterschiedlichen Polaritäten von PC (Polycarbonat), PVC (Polyvinylchlorid), PET (Polyethylenterephthalat), ABS (Acrylnitril-Butadien-Styrol-Copolymere), Epoxy-Materialien und Polyimiden ist es unmöglich, ein einzelnes Polymer zu finden, welches auf allen Materialien gleich gut haftet.

Weiterhin steigen die Anforderungen der Endkunden immer weiter an. So ist z.B. die Ebenheit des elektrischen Moduls mit dem Kartenkörper ein wichtiges Kriterium, da ansonsten die Karten nicht mehr ausgelesen werden könnten. Dies bedingt, dass die Implantiertemperaturen nach oben begrenzt sind, da ansonsten Verformungen auftreten.

Ein weiteres Kriterium ist die Anforderung aus dem Bankenbereich, dass die elektrischen Module sich nicht zerstörungsfrei entfernen lassen. Dementsprechend muss die innere Kohäsion des Klebers sehr hoch sein, so dass er nicht in der Mitte spaltet und die Haftung zu beiden Seiten (Kartenkörper und elektrisches Modul) extrem hoch ist. Gleichzeitig muss der Kleber auch eine sehr hohe Flexibilität aufweisen, da die Karten nach der Implantierung Torsionstests und Biegetest durchlaufen. Bevorzugt sollte erst das Kartenmaterial brechen, bevor die Haftung zum Kartenkörper und zum elektrischen Modul aussetzt. In der Regel werden noch nicht einmal Abhebungen am Rand geduldet.

Ein weiteres Kriterium sind Temperaturschwankungen und der Einfluss von Feuchtigkeit, da diese Karten in der späteren Benutzung sowohl hohe als auch tiefe Temperaturen stand halten und zum Teil auch einmal einen Waschdurchgang überstehen müssen. Dementsprechend sollte der Kleber bei tiefen Temperaturen nicht verspröden, bei hohen Temperaturen nicht verflüssigen und eine geringe Tendenz zur Aufnahme von Wasser besitzen.

Ein weiteres Anforderungskriterium ist durch die wachsende Anzahl des Kartenbedarfs die Verarbeitungsgeschwindigkeit. Der Kleber sollte sehr schnell erweichen oder Aufschmelzen, damit der Implantierprozess innerhalb einer Sekunde abgeschlossen werden kann.

Der Erfindung liegt in Anbetracht dieses Standes der Technik die Aufgabe zu Grunde, das Implantieren von elektrischen Modulen in einen Kartenkörper zu verbessern, wobei die oben genannten Kriterien erfüllt werden und insbesondere zu den unterschiedlichen Kartenkörpern und elektrischen Modulen eine sehr hohe Haftung erzielt wird.

Erfindungsgemäß wird die Aufgabe gelöst durch die Verwendung einer Klebstofffolie, die zweischichtig aufgebaut ist, wobei die eine Schicht eine sehr gute Haftung zu den unterschiedlichen Kartenkörpem besitzt und die andere Schicht eine sehr gute Haftung zum elektrischen Modul aufweist. Siehe hierzu Fig. 1; es zeigen:

1 ein elektrisches Modul (Chip)
2 den Kartenkörper
3 die Klebeschicht (i)
4 die Klebeschicht (ii).

Die Klebeschichten (i) und (ii) können die gleichen Schichtdicken oder unterschiedliche Schichtdicken aufweisen. Der gesamte Klebeverbund besitzt in einer bevorzugten Auslegung eine Schichtdicke zwischen 10 und 125 $\mu$m. In einer weiteren bevorzugten Auslegung weist die Klebeschicht (i) zwischen 5 und 90 $\mu$m auf, die Klebeschicht (ii) ebenfalls zwischen 5 und 90 $\mu$m.

In einer weiteren Auslegung der Erfindung können zwischen den beiden Klebeschichten (i) und (ii) weitere ("dritte") Schichten (im weiteren auch als "Zwischenschichten" bezeichnet) vorhanden sein, insbesondere Primer-, Sperr- und/oder Trägerschichten, wobei diese Funktionen auch in einer oder mehreren der weiteren Schichten vereint sein können. Vergleiche hierzu Fig.2, wobei die Bezeichnungen denen in Fig. 1 entsprechen und

5 eine Zwischenschicht (Primer/Sperrschicht/Träger)

darstellt.

Die Schichtdicke der Zwischenschichten liegt in einer bevorzugten Auslegung zwischen 0,5 und 100 μm. Die Klebschichten (i) und (ii) und die weiteren Schichten unterscheiden sich in Hinblick auf ihre chemische Zusammensetzung.

**Klebeschicht (i)**

Die Klebeschicht (i), ausgerichtet zur Verklebung des elektrischen Moduls, muss eine gute Haftung zu Epoxy-Materialien und Polyimiden aufweisen.

In einer bevorzugten Auslegung werden hierfür thermoplastische Materialien eingesetzt, die durch Ihr Aufschmelzen eine gute Benetzung der Epoxy- oder Polyimidoberfläche erreichen. Hier werden besonders bevorzugt folgende Polymere eingesetzt: Polyester, Polyamide, Copolyamide, Copolyester.

Geeignet im erfinderischen Sinne sind aber Polyurethane, Ethylenvinylacetate, Synthesekautschuke, wie z.B. Styrolisopren Di und Triblockcopolymere (SIS), Styrolbutadien Di- und Triblockcopolymere (SBS), Styrolethylenbutadien Di- und Triblockcopolymer (SEBS), Polyvinylacetat, Polyimide, Polyether, Copolyamide, Copolyester, Polyolefine, wie z.B. Polyethylen, Polypropylen oder Poly(metha)crylate.

Die Schicht (i) umfasst somit Klebemassen, die unter Temperatureinwirkung und optionalen Druck haftklebrig werden und nach der Verklebung und Abkühlen durch die Verfestigung eine hohe Klebkraft auf Polyimid oder Epoxy-Materialien aufbauen. Die Klebkraft ist besonders bevorzugt so hoch, dass nach dem Implantierprozess das elektrische Modul nicht mehr zerstörungsfrei entfernt werden kann. Je nach Implantiertemperatur weisen diese hitzeaktivierbaren Klebemassen unterschiedliche' statische Glasübergangstemperaturen $T_{G,A}$ oder einen Schmelzpunkte $T_{S,A}$ auf. In einem sehr bevorzugten Bereich liegt die $T_{G,A}$ oder $T_{S,A}$ in einem Bereich zwischen + 55°C und 150°C.

Zur Optimierung der klebtechnischen Eigenschaften und des Aktivierungsbereiches lassen sich Klebkraftsteigernde Harze oder Reaktivharze hinzusetzten, bevorzugt ohne dass es zu einer Reaktion zwischen diesen Harzen und der Klebmasse kommt.

Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Thermoplasten kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können als Klebemasse für die Schicht (i) auch hitzeaktivierbare Kleber eingesetzt werden, die aus einem Elastomer und zumindestens einem Reaktivharz bestehen.

Als Elastomere werden in diesem Fall bevorzugt Kautschuke, Polychlorisoprene, Polyacrylate, Nitrilkautschuke, epoxidierte Nitrilkautschuke, etc. eingesetzt. Alls Reaktivharze eigenen sich z.B. Phenolharze, Epoxy Harze, Melaminharze, Harze mit Isocyanatfunktionen oder Mischungen aus den obengenannten Harzen. In Kombination mit den Reaktivsystemen lassen sich auch eine Vielzahl anderer Harze, Füllmaterialien, Katalysatoren, Alterungsschutzmittel etc. zusetzen.

Eine sehr bevorzugte Gruppe umfasst Epoxy-Harze. Das Molekulargewicht (Gewichtsmittel Mw) der Epoxy-Harze variiert von 100 g/mol bis zu maximal 10.000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Als Novolak-Harze können z.B. eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich als Reaktivharze auch Phenolharze, wie z.B. YP 50 von Toto Kasei, PKHC von Union Carbide Corp. Und BKR 2620 von Showa Union Gosei Corp. einsetzen.

Weiterhin lassen sich als Reaktivharze auch Polyisocyanate, wie z.B. Coronate™ L von Nippon Polyurethan Ind., Desmodur™ N3300 oder Mondur™ 489 von Bayer einsetzen.

In einer weiteren bevorzugten Auslegung werden Klebemassen auf Poly(meth)acrylatbasis eingesetzt. Sehr bevorzugt werden Polymere eingesetzt, die aus Polymeren aus zumindest den folgenden Monomeren bestehen

a1)70 bis 100 Gew.-% Acrylsäureester und/oder Methacrylsäureester und/oder deren freien Säuren mit der folgenden Formel

$$CH2 = C(R1)(COOR2),$$

wobei R1 = H und/oder CH3 und R2 = H und/oder Alkylketten mit 1 bis 30 C-Atomen sind.
Weiterhin sind zur Herstellung der Polymere optional die folgenden Monomere zugesetzt:

a2) bis zu 30 Gew.-% olefinisch ungesättigte Monomere mit funktionellen Gruppen.

In einer sehr bevorzugten Auslegung werden für die Monomere a1) Acrylmomonere umfassend Acryl- und Methacrylsäureester mit Alkylgruppen bestehend aus 1 bis 14 C-Atomen eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propymethacrylat, n-Butylacrylat, n-Butylmethacrylat, n-Pentylacrylat, n-Hexylacrylat, n-Hexylmethacrylat, n-Heptylacrylat, n-Octylacrylat, n-Nonyacryat, Laurylacrylat, Stearylacrylat, Stearylmethacrylat, Behenylacrylat, und deren verzweigten Isomere, wie z.B. 2-Ethylhexylacrylat. Weitere einzusetzende Verbindungsklassen, die ebenfalls in geringen Mengen unter a1) hinzugesetzt werden können, sind Cyclohexylmethacrylate, Isobornylacrylat und Isobornylmethacrylate.

In einer vorteilhaften Variante werden für a2) Acrylmonomere entsprechend der folgenden allgemeinen Formel eingesetzt,

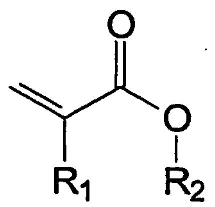

wobei $R_1$ = H und/oder $CH_3$ ist und der Rest $-OR_2$ eine funktionelle Gruppe darstellt oder beinhaltet, welche eine nachfolgende UV-Vernetzung der Haftklebemasse unterstützt, welche z.B. in einer besonders bevorzugten Auslegung eine H-Donor Wirkung besitzt.

Besonders bevorzugte Beispiele für die Komponente a2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert: Butylacrylamid, N-Methylolmethacrylamid, N-(Buthoxymethyl)methacrylamid, N-Methylolacrylamid, N-(Ethoxymethyl) acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente a2) aromatische Vinylverbindungen eingesetzt, wobei die aromatischen Kerne bevorzugt aus $C_4$- bis $C_{18}$-Bausteinen bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, dass die resultierenden Polymere als hitzeaktivierbare Klebemassen eingesetzt werden können, insbesondere derart, dass die resultierenden Polymere klebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft oberhalb 30 °C.
Zur Erzielung einer Glasübergangstemperatur $T_{G,A}$ der Polymere von $T_{G,A} \geq 30$ °C werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{W_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Für die Verankerung der hitzeaktivierbaren Polymere von Schicht (i) kann es von Vorteil sein, wenn das Polymer vor der Beschichtung mit Corona oder Plasma behandelt wird. Für die atmosphärische Plasmabehandlung eignen sich z.B. Geräte der Fa. Plasmatreat. Weiterhin kann es für den Prozess und für die Verankerung der Schicht (i) mit der Schicht (ii) von Vorteil sein, wenn eine chemische Verankerung z.B. über einen Primer stattfindet.

In einer weiteren bevorzugten Ausführungsform des erfindungsgemäßen Haftklebebandes werden Polyolefine, insbesondere Poly-α-olefine, im Sinne der Schicht (i) eingesetzt, die einen Erweichungsbereich von größer 30 °C und kleiner 150°C aufweisen und sich ebenfalls nach der Verklebung während des Abkühlens wieder verfestigen. Die polyolefinaktivierbaren Haftklebemassen weisen in einer bevorzugten Ausführungsform statische Glasübergangstemperaturen $T_{G,A}$ oder Schmelzpunkte $T_{S,A}$ von +65 °C bis 140 °C auf. Die Klebkraft dieser Polymere kann durch gezielte Additivierung gesteigert werden. So lassen sich z.B. Polyimin- oder Polyvinylacetat-Copolymere als klebkraftfördemde Zusätze verwenden.

Zur Erzielung der gewünschten statischen Glasübergangstemperatur $T_{G,A}$ oder des Schmelzpunktes $T_{S,A}$ werden die eingesetzten Monomere sowie deren Mengen auch hier bevorzugt wieder derart gewählt, dass bei Anwendung der Fox-Gleichung (G1) die gewünschte Temperatur resultiert.

Neben der Monomer bzw. Comonomerzusammensetzung zur Steuerung der Glasübergangstemperatur kann das Molekulargewicht (Gewichtsmittel Mw) variiert werden. Um eine niedrige statische Glasübergangstemperatur $T_{G,A}$ oder Schmelzpunkt $T_{S,A}$ einzustellen, werden Polymere mit einem mittleren oder niedrigen Molekulargewicht (Gewichtsmittel Mw) eingesetzt. Auch können niedermolekulare und hochmolekulare Polymere miteinander gemischt werden. In besonders bevorzugten Auslegungen werden Polyethylene, Polypropene, Polybutene, Polyhexene oder Copolymerisate aus Polyethylen, Polypropen, Polybuten oder Polyhexen eingesetzt.

Von der Firma Degussa sind unter dem Handelsnamen Vestoplast™ unterschiedliche hitzeaktivierbare Poly-α-olefine kommerziell erhältlich. Es werden Propen-reiche Typen unter den Bezeichnungen Vestoplast™ 703, 704, 708, 750, 751, 792, 828, 888 oder 891 angeboten. Diese besitzen Schmelzpunkte $T_{S,A}$ von 99 bis 162 °C. Weiterhin sind auch butenreiche Typen unter den Bezeichnungen Vestoplast™ 308, 408, 508, 520 und 608 kommerziell erhältlich. Diese besitzen Schmelzpunkte $T_{S,A}$ von 84 bis 157 °C.

Weitere Beispiele für hitzeaktivierbare Haftklebemassen werden in den Patenten US 3,326,741, US 3,639,500, US 4,404,246, US 4,452,955, US 4,545,843, US 4,880,683 und US 5,593,759 beschrieben. In diesen wird ebenfalls auf weitere temperaturaktivierbare Haftklebemassen hingewiesen.

**Klebeschicht (ii)**

Die Klebeschicht (ii) wird dermaßen gewählt, dass Sie sich von der Schicht (i) (i) durch ihre chemische Zusammensetzung unterscheidet Die Klebeschicht (ii) besitzt eine sehr gute Haftung zu PC und/oder ABS und/oder PET und/oder PVC. In einer sehr bevorzugten Auslegung ist die Haftung zu diesen Materialien so hoch, dass sich das elektrische Modul nicht mehr zerstörungsfrei vom Kartenkörper entfernen lässt. Je nach Implantiertemperatur weisen die hitzeaktivierbaren Klebemassen für Klebeschicht (ii) unterschiedliche statische Glasübergangstemperaturen $T_{G,A}$ oder einen Schmelzpunkte $T_{S,A}$ auf. In einem sehr bevorzugten Bereich liegt die $T_{G,A}$ oder $T_{S,A}$ in einem Bereich zwischen + 55°C und 150°C.

In einer bevorzugten Auslegung werden hierfür thermoplastische Materialien eingesetzt, die durch Ihr Aufschmelzen eine gute Benetzung zur Kartenoberfläche erreichen. Hier werden besonders bevorzugt folgende Polymere eingesetzt: Polyurethane und/oder Synthesekautschuke, wie z.B. Styrolisopren-di- und -triblockcopolymere (SIS), Styrolbutadien-di- und -triblockcopolymere (SBS), Styrolethylenbutadien-di- und -triblockcopolymere (SEBS).

Weiterhin lassen sich erfindungsgemäß auch Polyester, Polyamide, Ethylenvinylacetate, Polyvinylacetat, Polyimide, Polyether, Copolyamide, Copolyester, Polyolefine, wie z.B. Polyethylen, Polypropylen und/oder Poly(metha) crylate einsetzen.

Zur Optimierung der klebtechnischen Eigenschaften und des Aktiiverungsbereiches lassen sich klebkraftsteigemde Harze oder Reaktivharze hinzusetzten.

Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenotharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Thermoplasten kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren bevorzugten Ausführung werden hitzeaktivierbare Kleber eingesetzt, die aus einem Elastomer und zumindestens einem Reaktivharz bestehen. Als Elastomere werden in diesem Fall bevorzugt Kautschuke, Polychlorisoprene, Polyacrylate, Nitrilkautschuke, epoxidierte Nitrilkautschuke, etc. eingesetzt. Als Reaktivharze eigenen sich z.B. Phenolharze, Epoxy Harze, Melaminharze, Harze mit Isocyanatfunktionen oder Mischungen aus den obengenannten Harzen. In Kombination mit den Reaktivsystemen lassen sich auch eine Vielzahl anderer Harze, Füllmaterialien Katalysatoren, Alterungsschutzmittel etc. zusetzen.

Eine sehr bevorzugte Gruppe umfasst Epoxy-Harze. Das Molekulargewicht (Gewichtsmittel Mw) der Epoxy-Harze variiert von 100 g/mol bis zu maximal 10000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Als Novolak-Harze können z.B. eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich als Reaktivharze auch Phenolharze, wie z.B. YP 50 von Toto Kasei, PKHC von Union Carbide Corp. Und BKR 2620 von Showa Union Gosei Corp. einsetzen.

Weiterhin lassen sich als Reaktivharze auch Polyisocyanate, wie z.B. Coronate™ L von Nippon Polyurethan Ind., Desmodur™ N3300 oder Mondur™ 489 von Bayer einsetzen.

Um die Reaktion zwischen den beiden Komponenten zu beschleunigen, lassen sich auch Vernetzer und Beschleuniger in die Mischung zu additivieren.

Als Beschleuniger eignen sich z.B. Imidazole, kommerziell erhältlich unter 2M7, 2E4MN, 2PZ-CN, 2PZ-CNS, P0505, L07N von Shikoku Chem. Corp. oder Curezol 2MZ von Air Products.

Weiterhin lassen sich auch Amine, insbesondere tert.-Amine zur Beschleunigung einsetzen.

In einer weiteren bevorzugten Auslegung werden Klebemassen auf Poly(meth)acrylatbasis eingesetzt. Sehr bevorzugt werden Polymere eingesetzt, die aus Polymeren aus zumindest den folgenden Monomeren bestehen

a3)70 bis 100 Gew.-% Acrylsäureester und/oder Methacrylsäureester und/oder deren freien Säuren mit der folgenden Formel

$$CH2 = C(R1)(COOR2),$$

wobei R1 = H und/oder CH3 und R2 = H und/oder Alkylketten mit 1 bis 30 C-Atomen sind.
Weiterhin sind zur Herstellung der Polymere optional die folgenden Monomere zugesetzt:

a4) bis zu 30 Gew.-% olefinisch ungesättigte Monomere mit funktionellen Gruppen.

In einer sehr bevorzugten Auslegung werden für die Monomere a3) Acrylmomonere umfassend Acryl- und Methacrylsäureester mit Alkylgruppen bestehend aus 1 bis 14 C-Atomen eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propymethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z.B. 2-Ethylhexylacrylat. Weitere einzusetzende Verbindungsklassen, die ebenfalls in geringen Mengen unter a3) hinzugesetzt werden können, sind Cyclohexylmethacrylate, Isobornylacrylat und Isobomylmethacrylate.

In einer vorteilhaften Variante werden für a4) Acrylmonomere entsprechend der folgenden allgemeinen Formel eingesetzt,

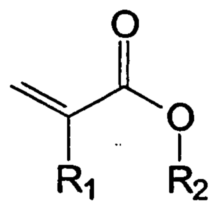

wobei $R_1$ = H und/oder $CH_3$ ist und der Rest $-OR_2$ eine funktionelle Gruppe darstellt oder beinhaltet, welche eine nachfolgende UV-Vemetzung der Haftklebemasse unterstützt, welche z.B. in einer besonders bevorzugten Auslegung eine H-Donor Wirkung besitzt.

Besonders bevorzugte Beispiele für die Komponente a4) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente a4) aromatische Vinylverbindungen eingesetzt, wobei die aromatischen Kerne bevorzugt aus $C_4$- bis $C_{18}$-Bausteinen bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, dass die resultierenden Polymere als hitzeaktivierbare Klebemassen eingesetzt werden können, insbesondere derart, dass die resultierenden Polymere klebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft oberhalb 30 °C.

Zur Erzielung einer Glasübergangstemperatur $T_{G,A}$ der Polymere von $T_{G,A} \geq 30$ °C werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer weiteren bevorzugten Ausführungsform des erfindungsgemäßen Haftklebebandes werden Polyolefine,

insbesondere Poly-α-olefine, im Sinne der Schicht (i) eingesetzt, die einen Erweichungsbereich von größer 30 °C und kleiner 150 °C aufweisen und sich ebenfalls nach der Verklebung während des Abkühlens wieder verfestigen. Die polyolefinaktivierbaren Haftklebemassen weisen in einer bevorzugten Ausführungsform statische Glasübergangstemperaturen $T_{G,A}$ oder Schmelzpunkte $T_{S,A}$ von +65 °C bis 140 °C auf. Die Klebkraft dieser Polymere kann durch gezielte Additivierung gesteigert werden. So lassen sich z.B. Polyimin- oder Polyvinylacetat-Copolymere als klebkraftfördemde Zusätze verwenden.

Zur Erzielung der gewünschten statischen Glasübergangstemperatur $T_{G,A}$ oder des Schmelzpunktes $T_{S,A}$ werden die eingesetzten Monomere sowie deren Mengen auch hier bevorzugt wieder derart gewählt, dass bei Anwendung der Fox-Gleichung (G1) die gewünschte Temperatur resultiert.

Neben der Monomer bzw. Comonomerzusammensetzung zur Steuerung der Glasübergangstemperatur kann das Molekulargewicht (Gewichtsmittel Mw) variiert werden. Um eine niedrige statische Glasübergangstemperatur $T_{G,A}$ oder Schmelzpunkt $T_{S,A}$ einzustellen, werden Polymere mit einem mittleren oder niedrigen Molekulargewicht (Gewichtsmittel Mw) eingesetzt. Auch können niedermolekulare und hochmolekulare Polymere miteinander gemischt werden. In besonders bevorzugten Auslegungen werden Polyethylene, Polypropene, Polybutene, Polyhexene oder Copolymerisate aus Polyethylen, Polypropen, Polybuten oder Polyhexen eingesetzt.

Von der Firma Degussa sind unter dem Handelsnamen Vestoplast™ unterschiedliche hitzeaktivierbare Poly-α-olefine kommerziell erhältlich. Es werden Propen-reiche Typen unter den Bezeichnungen Vestoplast™ 703, 704, 708, 750, 751, 792, 828, 888 oder 891 angeboten. Diese besitzen Schmelzpunkte $T_{S,A}$ von 99 bis 162 °C. Weiterhin sind auch Buten-reiche Typen unter den Bezeichnungen Vestoplast™ 308, 408, 508, 520 und 608 kommerziell erhältlich. Diese besitzen Schmelzpunkte $T_{S,A}$ von 84 bis 157 °C.

Weitere Beispiele für hitzeaktivierbare Haftklebemassen werden in den Patenten US 3,326,741, US 3,639,500, US 4,404,246, US 4,452,955, US 4,4043345, US 4,545,843, US 4,880,683 und US 5,593,759 beschrieben. In diesen wird ebenfalls auf weitere Temperatur-aktivierbaren Haftklebemassen hingewiesen.

**Zwischenschicht (Primerschicht / Sperrschicht / Träger)**

Zusätzlich zu den Schichten (i) und (ii) können eine oder mehrere weitere Schichten ("Zwischenschichten") vorgesehen sein, insbesondere Primer-, Sperr- und/oder Trägerschichten., wobei diese Funktionen auch in einer oder mehreren der weiteren Schichten vereint sein können. Insbesondere vorteilhaft ist es, eine Zwischenschicht vorzusehen.

Die Zwischenschicht muss eine gute Haftung zu der Klebeschicht (i) und (ii) aufweisen. Hierfür können haftklebrige Materialien oder thermoplastische Materialien eingesetzt werden. In einer weiteren bevorzugten Auslegung werden Primer eingesetzt.

Als Primer eignen alle dem Fachmann bekannten und kommerziell erhältlichen Primer. So werden in einer bevorzugten Auslegung Sarane, Aziridine oder Isocyanate auch in Kombination miteinander eingesetzt. Bevorzugt wird als Reaktiv-Primer ein bi- oder multifunktionelles Aziridin oder Isocyanat eingesetzt, wobei die Primer in einer Matrix eingerührt werden können.

Als polymere oder präpolymere Verbindungen, die als Primer geeignet sind, können weiterhin Verbindungen mit Carbonsäuregruppen eingesetzt werden. Geeignete Polymere sind z.B. Polyurethane, Polyurethan/Acrylat Copolymere, Copolymere oder Terpolymere von Polyalkylenen, Polyalkyldienen, Polyacrylatestem, Polyalkylestern, Polyvinylestern, Polyvinylen mit Acrylsäure oder Methacrylsäure.
Beispiele für Copolymere sind Polyethylen/acrylsäure-Copolymere, Polyethylen/methacrylsäure-Copolymere, Polyethylenlmethacylsäurelacrylsäure-Terpolymere, Methylmethacrylate/Acrylsäure-Copolymere, Polybutadien/methacrylsäure-Copolymere, Vinylchloride/Acrylsäure-Copolymere, und Mischungen daraus. Die bevorzugten Polymere und Copolymere sind Polyurethane, Polyethylen/acrylsäure-Copolymere und Polyethylen/Methacrylsäure Copolymere. Die Eigenschaften können durch die Anzahl der Carbonsäuregruppen variiert werden.

Weiterhin können die Primer reaktive Gruppen besitzen. Vernetzende Verbindungen für die entsprechenden Abmischungen besitzen bevorzugt multifunktionelle Gruppen. Multifunktionell bedeutet, dass die Verbindungen eine Funktionalität von größer oder gleich 2 besitzen.

Geeignete Vernetzer umfassen beispielsweise polyfunktionelle Aziridine, multifunktionelle Carbodiimide, multifunktionelle Epoxid- und Melamin-Harze. Die bevorzugten Vernetzer sind polyfunktionelle Aziridine, wie z.B. Trimethylpropane-tris-(B-(N-aziridinyl)propionat, Pentaerythritol-tris-(B-(aziridinyl)propionat, and 2-Methyl-2-ethyl-2-((3-(2-methyl-1-aziridinyl)-1-oxopropoxy)methyl)-1,3-propandiylester.

Alternativ können auch Primer mit Hydroxygruppen oder Amingruppen eingesetzt werden.

Weiterhin können zur Verfestigung auch Bindemittel eingesetzt werden. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Als Trägermaterial, beispielsweise für die Zwischenschicht(en) lassen sich hierbei die dem Fachmann geläufigen und üblichen Materialien, wie Folien (Polyester, PET, PE, PP, BOPP, PVC, Polyimid, Polymethacrylat, PEN, PVB, PVF, Polyamid), Vliese, Schäume, Gewebe und Gewebefolien verwenden.

Für thermoplastische Materialien werden besonders bevorzugt folgende Polymere eingesetzt, wobei bei dieser Aufzählung kein Anspruch auf Vollständigkeit besteht: Polyurethane, Polyester, Polyamide, Ethylenvinylacetate, Synthesekautschuke, wie z.B. Styrolisopren Di und Triblockcopolymere (SIS), Styrolbutadien Di- und Triblockcopolymere (SBS), Styrolethylenbutadien Di- und Triblockcopolymer (SEBS), Polyvinylacetat, Polyimide, Polyether, Copolyamide, Copolyester, Polyolefine, wie z.B. Polyethylen, Polypropylen oder Poly(metha)crylate.

Die Zwischenschicht '(Primer / Sperrschicht / Träger) umfasst weiterhin Klebemassen, die unter Temperatureinwirkung und optionalen Druck haftklebrig werden und nach der Verklebung und Abkühlen durch die Verfestigung eine hohe Klebkraft zu den Klebschichten (i) und (ii) aufweisen.

Diese hitzeaktivierbaren Klebemassen besitzen unterschiedliche statische Glasübergangstemperaturen $T_{G,A}$ oder Schmelzpunkte $T_{S,A}$. In einem sehr bevorzugten Bereich liegt die $T_{G,A}$ oder $T_{S,A}$ in einem Bereich zwischen + 25°C und 250°C.

Zur Optimierung der klebtechnischen Eigenschaften und des Aktivierungsbereiches lassen sich klebkraftsteigemde Harze oder Reaktivharze hinzusetzten.

Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Thermoplasten kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren bevorzugten Ausführung werden für die Zwischenschicht hitzeaktivierbare Kleber eingesetzt, die aus einem Elastomer und zumindestens einem Reaktivharz bestehen. Als Elastomere werden in diesem Fall bevorzugt Kautschuke, Polychlorisoprene, Polyacrylate, Nitrilkautschuke, epoxidierte Nitrilkautschuke, etc. eingesetzt. Als Reaktivharze eigenen sich z.B. Phenolharze, Epoxy Harze, Melaminharze, Harze mit Isocyanatfunktionen oder Mischungen aus den obengenannten Harzen. In Kombination mit den Reaktivsystemen lassen sich auch eine Vielzahl anderer Harze, Füllmaterialien, Katalysatoren, Alterungsschutzmittel etc. zusetzen.

Eine sehr bevorzugte Gruppe umfasst Epoxy-Harze. Das Molekulargewicht (Gewichtsmittel Mw) der Epoxy-Harze variiert von 100 g/mol bis zu maximal 10000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPTTM 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Als Novolak-Harze können z.B. eingesetzt werden, Epi-Rez™ 5132 von Celanese, ESCN-001 von Sumitomo Chemical, CY-281 von Ciba Geigy, DENTM 431, DENTM 438, Quatrex 5010 von Dow Chemical, RE 305S von Nippon Kayaku, Epidon™ N673 von DaiNipon Ink Chemistry oder Epicote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich als Reaktivharze auch Phenolharze, wie z.B. YP 50 von Toto Kasei, PKHC von Union Carbide Corp. Und BKR 2620 von Showa Union Gosei Corp. einsetzen.

Weiterhin lassen sich als Reaktivharze auch Polyisocyanate, wie z.B. Coronate™ L von Nippon Polyurethan Ind., Desmodur™ N3300 oder Mondur™ 489 von Bayer einsetzen.

Um die Reaktion zwischen den beiden Komponenten zu beschleunigen, lassen sich auch Vernetzer und Beschleuniger in die Mischung zu additivieren.

Als Beschleuniger eignen sich z.B. Imidazole, kommerziell erhältlich unter 2M7, 2E4MN, 2PZ-CN, 2PZ-CNS,

P0505, L07N von Shikoku Chem. Corp. oder Curezol 2MZ von Air Products.

Weiterhin lassen sich auch Amine, insbesondere tert.-Amine zur Beschleunigung einsetzen.

In einer weiteren bevorzugten Auslegung für die Zwischenschicht werden Klebemassen oder hitzeaktivierbare Klebemassen auf Poly(meth)acrylatbasis eingesetzt. Sehr bevorzugt werden Polymere eingesetzt, die aus Polymeren aus zumindest den folgenden Monomeren bestehen

a5)70 bis 100 Gew.-% Acrylsäureester und/oder Methacrylsäureester und/oder deren freien Säuren mit der folgenden Formel

CH2 = C(R1)(COOR2),

wobei R1 = H und/oder CH3 und R2 = H und/oder Alkylketten mit 1 bis 30 C-Atomen sind.
Weiterhin sind zur Herstellung der Polymere optional die folgenden Monomere zugesetzt:

a6) bis zu 30 Gew.-% olefinisch ungesättigte Monomere mit funktionellen Gruppen.

In einer sehr bevorzugten Auslegung werden für die Monomere a5) Acrylmomonere umfassend Acryl- und Methacrylsäureester mit Alkylgruppen bestehend aus 1 bis 14 C-Atomen eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propymethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z.B. 2-Ethylhexylacrylat. Weitere einzusetzende Verbindungsklassen, die ebenfalls in geringen Mengen unter a1) hinzugesetzt werden können, sind Cyclohexylmethacrylate, Isobornylacrylat und Isobornylmethacrylate.

In einer vorteilhaften Variante werden für a5) Acrylmonomere entsprechend der folgenden allgemeinen Formel eingesetzt,

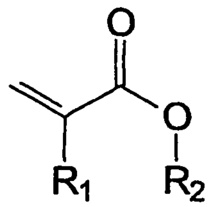

wobei $R_1$ = H und/oder $CH_3$ ist und der Rest -$OR_2$ eine funktionette Gruppe darstellt oder beinhaltet, welche eine nachfolgende UV-Vernetzung der Haftklebemasse unterstützt, welche z.B. in einer besonders bevorzugten Auslegung eine H-Donor Wirkung besitzt.

Besonders bevorzugte Beispiele für die Komponente a6) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylainid, N-(Ethoxymethyl)acrylamid, N-Isopropylacrylamid, Vinylessigsäure, Tetrahydrofufurytacrtyat, β-Acryloyloxypropionsäure, Trichlor acrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente a6) aromatische Vinylverbindungen eingesetzt, wobei die aromatischen Kerne bevorzugt aus $C_4$- bis $C_{18}$-Bausteinen bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, dass die resultierenden Polymere als hitzeaktivierbare Klebemassen oder als Haftklebemassen eingesetzt werden können, insbesondere derart, dass die resultierenden Polymere klebende Eigenschaften entsprechend des "Handbook of Pressure Sensitive Adhesive Technology" von Donatas Satas (van Nostrand, New York 1989) besitzen. Für die Anwendungen als hitzeaktivierbare Klebemasse liegt die statische Glasübergangstemperatur des resultierenden Polymers vorteilhaft oberhalb 30 °C. Für die Anwendung

als Haftklebemasse liegt die gewünschte Glasübergangstemperatur $T_{G,A}$ unterhalb 15 °C.
Zur Erzielung der gewünschten Glasübergangstemperatur werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Für die Verankerung kann es von Vorteil sein, wenn das Polymer vor der Beschichtung mit Corona oder Plasma behandelt wird. Für die atmosphärische Plasmabehandlung eignen sich z.B. Geräte der Fa. Plasmatreat.

In einer weiteren bevorzugten Ausführungsform des erfindungsgemäßen Haftklebebandes werden für Zwischenschicht Polyolefine, insbesondere Poly-$\alpha$-olefine eingesetzt, die bevorzugt einen Erweichungsbereich von größer 30 °C und kleiner 150 °C aufweisen und sich ebenfalls nach der Verklebung während des Abkühlens wieder verfestigen. Die polyolefinaktivierbaren Klebemassen weisen in einer bevorzugten Ausführungsform statische Glasübergangstemperaturen $T_{G,A}$ oder Schmelzpunkte $T_{S,A}$ von +65 °C bis 140 °C auf. Die Klebkraft dieser Polymere kann durch gezielte Additivierung gesteigert werden. So lassen sich z.B. Polyimin- oder Polyvinylacetat-Copolymere als klebkraftfördernde Zusätze verwenden.

Zur Erzielung der gewünschten statischen Glasübergangstemperatur $T_{G,A}$ oder des Schmelzpunktes $T_{S,A}$ werden die eingesetzten Monomere sowie deren Mengen auch hier bevorzugt wieder derart gewählt, dass bei Anwendung der Fox-Gleichung (G1) die gewünschte Temperatur resultiert.

Neben der Monomer bzw. Comonomerzusammensetzung zur Steuerung der Glasübergangstemperatur kann das Molekulargewicht (Gewichtsmittel Mw) variiert werden. Um eine niedrige statische Glasübergangstemperatur $T_{G,A}$ oder Schmelzpunkt $T_{S,A}$ einzustellen, werden Polymere mit einem mittleren oder niedrigen Molekulargewicht (Gewichtsmittel Mw) eingesetzt. Auch können niedermolekulare und hochmolekulare Polymere miteinander gemischt werden. In besonders bevorzugten Auslegungen werden Polyethylene, Polypropene, Polybutene, Polyhexene oder Copolymerisate aus Polyethylen, Polypropen, Polybuten oder Polyhexen eingesetzt.

Von der Firma Degussa sind unter dem Handelsnamen Vestoplast™ unterschiedliche hitzeaktivierbare Poly-$\alpha$-olefine kommerziell erhältlich. Es werden Propen-reiche Typen unter den Bezeichnungen Vestoplast™ 703, 704, 708, 750, 751, 792, 828, 888 oder 891 angeboten. Diese besitzen Schmelzpunkte $T_{S,A}$ von 99 bis 162 °C. Weiterhin sind auch Buten-reiche Typen unter den Bezeichnungen Vestoplast™ 308, 408, 508, 520 und 608 kommerziell erhältlich. Diese besitzen Schmelzpunkte $T_{S,A}$ von 84 bis 157 °C.

Weitere Beispiele für hitzeaktivierbare Haftklebemassen werden in den Patenten US 3,326,741, US 3,639,500, US 4,404,246, US 4,452,955, US 4,4043345, US 4,545,843, US 4,880,683 und US 5,593,759 beschrieben. In diesen wird ebenfalls auf weitere Temperatur-aktivierbaren Haftklebemassen hingewiesen.

**Verfahren zur Herstellung**

Die mehrschichtige hitzeaktivierbare Klebemasse kann nach verschiedenen Verfahren hergestellt werden. In einem weiteren sehr bevorzugten Verfahren werden die Schichten (i), (ii) und die Zwischenschicht(en) im Coextrusionsverfahren gleichzeitig mit einer Coextrusionsdüse zusammengeführt. Die Coextrusion der Zwischenschicht(en) erfolgt - je nach Produktaufbau - optional.

In einem weiteren Verfahren werden die Klebemasse (i), (ii) und die Zwischenschicht(en) getrennt aufgetragen. In einem ersten Schritt wird die Klebemasse (i) auf ein Trennpapier oder einen Trennliner oder einem Prozessliner beschichtet. Die Beschichtung kann aus Lösung oder aus der Schmelze erfolgen. Bei der Beschichtung aus Lösung wird - wie bei der Verarbeitung von Klebemassen aus Lösung üblich - bevorzugt mit der Rakeltechnik gearbeitet, wobei hier alle dem Fachmann bekannten Rakeltechniken eingesetzt werden dürfen. Für den bevorzugten Auftrag aus der Schmelze wird - falls das Polymer in Lösung vorliegt - das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Dann wird über eine Schmelzdüse oder eine Extrusionsdüse beschichtet, wobei gegebenenfalls der Klebefilm gereckt wird, um die optimale Beschichtungsdicke zu erreichen.
In einem zweiten Schritt wird die Klebemasse (ii) aus Lösung oder aus der Schmelze auf die Klebemasse (i) aufgetragen.

Für die Beschichtung aus Lösung werden bevorzugt Lösemittel eingesetzt, die die Schicht (i) nicht auflösen oder aktivieren. Es wird - wie bei der Verarbeitung von Klebemassen aus Lösung üblich - bevorzugt mit der Rakeltechnik gearbeitet, wobei hier alle dem Fachmann bekannten Rakeltechniken eingesetzt werden dürfen. Für den Auftrag aus der Schmelze wird - falls das Polymer in Lösung vorliegt - das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Dann wird über eine Schmelzdüse oder eine Extrusionsdüse beschichtet, wobei gegebenenfalls der Klebefilm gereckt wird, um die optimale Beschichtungsdicke zu erreichen.

Für den mehrschichtigen Aufbau mit Zwischenschicht(en) wird/werden im zweiten Schritt die Zwischenschicht(en) auf die Klebeschicht (i) aus Lösung oder aus der Schmelze beschichtet. Optional wird im zweiten Schritt auch auf die Klebeschicht (ii) aus Lösung oder aus der Schmelze beschichtet und dann zur Klebeschicht (i) zukaschiert.

In einem dritten Verfahren werden die einzelnen Schichten getrennt beschichtet und anschließend zusammenkaschierl Die getrennte Beschichtung von der Klebemassen (i) und (ii) und der Zwischenschicht(en) kann aus Lösung oder auch aus der Schmelze geschehen und nach den bereits zuvor beschriebenen Verfahren erfolgen. Anschließend werden die Schichten zusammenkaschiert. Hierfür wird sehr bevorzugt ein beheizbares Walzensystem eingesetzt. Durch den Eintrag von Wärme werden die Klebeschichten (i) und (ii) und gegebenenfalls die Zwischenschicht(en) klebrig und die Verankerung wird deutlich verbessert.

Generell können zur Verbessung der Verankerung eine, zwei oder alle Schichten mit Corona und/oder Plasma und/oder Flamme erforderlich sein. Auch können alle anderen Methoden zur Erhöhung der Oberflächenspannung eingesetzt werden, wie z.B. Behandlung mit Chrom-Schwefel-Säure oder Trichloressigsäure bzw. Trifluoressigsäure.

Nach der Beschichtung der Klebemassen zu den Schichten (i) und/oder (ii) und/oder der/den Zwischenschichten kann es erforderlich sein, die Schichten zu vernetzen.

Zur optionalen Vernetzung mit UV-Licht werden den Klebemassen für die Schichten (i) und/oder (ii) und/oder der/den Zwischenschichten(en) UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinitiation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die Schichten mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

In einer weiteren Ausführungsform ist es vorteilhaft, die Schichten thermisch zu vernetzen.

Als Trägermaterialien für die mehrschichtigen Klebemassen werden die dem Fachmann geläufigen und üblichen Materialien, wie Folien (Polyester, PET, PE, PP, BOPP, PVC, Polyimid), Vliese, Schäume, Gewebe und Gewebefolien sowie Trennpapier (Glassine, HDPE, LDPE) verwendet. Die Trägermaterialien sollten mit einer Trennschicht ausgerüstet sein. Die Trennschicht besteht in einer sehr bevorzugten Auslegung der Erfindung aus einem Silikontrennlack oder einem fluorierten Trennlack.

Weiterhin ist Teil der vorliegenden Erfindung eine Verklebungseinheit bestehend aus einem Kartenkörper, einer zumindest zweischichtigen Klebstofffolie, wie sie vorstehend dargelegt und für die erfindungsgemäße Verwendung beschrieben wurde, und einem Chipmodul.

**Beispiele**

**Testmethoden:**

***Iso-Bending A)***

Der Iso-Bending Test wird analog Iso/IEC 10373: 1993 (E) Section 6.1 durchgeführt. Der Test gilt als bestanden, wenn insgesamt mehr als 4000 Biegungen erreicht werden.

***Extrem-Biegetest B)***

Im Extrembiegetest wird ein 3 cm breiter Ausschnitt mit dem elektrischen Modul in der Mitte liegend aus der Chipkarte ausgeschnitten und dann 10 x von 3 cm Breite auf 2,5 cm Breite zusammengedrückt. Der Test gilt als bestanden, wenn das elektrische Modul sich nicht herauslöst.

***Handtest C)***

Im Handtest wird die Chipkarte mit der Hand über eine der beiden Ecken, die näher zum elektrischen Modul liegen, so weit gebogen, bis dass die Karte bricht oder das Modul bricht. Dann gilt der Test als bestanden. Falls sich das elektrische Modul löst oder herausspringt, gilt der Test als nicht bestanden.
Alle Handelsnamen beschreiben die Produkte, wie sie am Prioritätstag käuflich zu erwerben waren.

Beispiel 1)

tesa HAF 8405® (30 μm Klebmassenschichtdicke, basierend auf einem Nitrilkautschuk und einem Phenolharz, = Klebeschicht (ii)) wird mit einem SIG Einschneckenextruder und einer Breyer Extrusionsdüse (300 μm Schlitz) mit 170 °C mit einem tesa HAF 8440® (Klebeschicht 45 μm basierend auf nichtreaktivierbare Copolyamide, = Klebeschicht (i)) beschichtet. Der Verbund wird vor dem Aufwickeln über eine Kühlwalze geführt.

Beispiel 2)

tesa HAF 8405® (30 μm Klebmassenschichtdicke, basierend auf einem Nitrilkautschuk und einem Phenolharz, = Klebeschicht (ii)) wird mit einem SIG Einschneckenextruder und einer Breyer Extrusionsdüse (300 μm Schlitz) mit 170 °C mit einem Copolyester (Grilltex™ 1616, Fa. EMS-Grilltex, = Klebeschicht (i)) beschichtet. Die Schichtdicke des Copolyester beträgt anschließend 50 μm. Der Verbund wird vor dem Aufwickeln über eine Kühlwalze geführt.

Beispiel 3)

Das Polyurethan (Pearlthane™ D 12F75, Fa. Danquinsa, = Klebeschicht (ii)) wird mittels eines SIG Einschneckenextruders und einer Breyer Extrusionsdüse (300 μm Schlitz) auf 170 °C erwärmt und unter Druck auf ein mit ca. 1,5 g/m$^2$ Polydimethylsiloxan beschichtetes Trennpapier beschichtet. Die Schichtdicke der Klebeschicht (ii) betrug nach der Beschichtung 40 μm. Anschließend wird in einem zweiten Schritt mit einem tesa HAF 8440 (Klebeschicht 45 μm basierend auf Copolyamid, = Klebeschicht (i)) auf die Schicht (ii) beschichtet. Der Verbund wird vor dem Aufwickeln über eine Kühlwalze geführt.

Implantierung der elektrischen Module

Die Implantierung der elektrischen Module in den Kartenkörper erfolgte mit einem Implanter der Fa. Ruhlamat Testplatz Modul einsetzen.
Es wurden folgende Materialien eingesetzt.
Elektrische Module: Nedcard Dummy, Tape-Type: 0232-10
PVC-Karten: Fa. CCD
ABS-Karte: Fa. ORGA
In einem ersten Schritt werden über eine Zweiwalzenkaschieranlage der Fa. Storck GmbH die Beispiele 1 bis 3 mit 2 bar auf den Modulgurt der Fa. Nedcard kaschiert. Hierbei ist zu beachten, dass die Klebeschicht (i) direkt auf den Modulgurt beschichtet wird.
Dann werden die elektrischen Module in die passende Kavität des Kartenkörpers implantiert.
Es wurden folgende Parameter für alle Beispiele angewendet:

Heizschritte: 2
Stempeltemperatur: 190°C
Zeit: 2 x 1 s
Kühlschritt: 1x 800 ms, 25°C
Druck: 70 N pro Modul

**Ergebnisse:**

Die mit den erfinderischen Klebemassen hergestellten Chipkarten wurden nach den Testmethoden A, B und C ausgetestet. Die Ergebnisse sind in der Tabelle 1 dargestellt.

Tabelle 1 kann entnommen werden, dass alle erfinderischen Beispiele die wichtigsten Kriterien für eine Chipkarte bestanden haben und somit sehr gut zur Verklebung von elektrischen Modulen auf Kartenkörpem geeignet sind.

| Beispiele | Testmethode A | Testmethode B | Testmethode C |
|---|---|---|---|
| 1 | bestanden | bestanden | bestanden |
| 2 | bestanden | bestanden | bestanden |
| 3 | bestanden | bestanden | bestanden |

**Patentansprüche**

1. Verwendung einer Klebstofffolie zur Verklebung von einem Chipmodul in einem Kartenkörper, aufweisend zumindest zwei Klebstoffschichten (i) und (ii), wobei sich die zumindest zwei Schichten (i) und (ii) der Klebstofffolie chemisch voneinander unterscheiden.

2. Verwendung nach Anspruch 1, **dadurch gekennzeichnet, dass** die Klebstoffe der Schichten (i) und/oder (ii) Haftklebstoffe sind.

3. Verwendung nach zumindest einem der vorangehenden Ansprüche, **dadurch gekennzeichnet, dass** die eine Schicht (i) eine hohe Verklebungskompatibilität zu Epoxy-Materialien und/oder Polyimiden aufweist und die andere Schicht (ii) eine hohe Verklebungskompatibilität zu Polycarbonat, Polyethylen, Polypropylen, Acrylnitril-Butadien-Styrol-Copolymer-Kunststoffen, Polyethylenterephthalat und/oder Polyvinylchlorid aufweist.

4. Verwendung nach zumindest einem der vorangehenden Ansprüche, **dadurch gekennzeichnet, dass** Schicht (i) auf thermoplastischen Polymeren basiert, insbesondere auf Basis von Polyestern, Polyamiden, Copolyestern und/oder Copolyamiden.

5. Verwendung nach zumindest einem der vorangehenden Ansprüche, **dadurch gekennzeichnet, dass** Schicht (ii) auf Polyurethanen und/oder Kautschuken, insbesondere Synthesekautschuken, basiert.

6. Verwendung nach zumindest einem der vorangehenden Ansprüche, **dadurch gekennzeichnet, dass** Schicht (ii) auf hitzeaktivierbaren Systemen basiert, insbesondere aus einem Elastomer und zumindest einem Reaktivharz, wobei insbesondere Kautschuke, Polychlorisoprene, Polyacrylate, Nitrilkautschuke und/oder epoxidierte Nitrilkautschuke als Elastomer und/oder Phenolharze, Epoxyharze, Melaminharze und/oder Harze mit Isocyanatfunktion allein oder in Kombination miteinander als Reaktivharze eingesetzt werden.

7. Verwendung nach zumindest einem der vorangehenden Ansprüche, **dadurch gekennzeichnet, dass** sich zwischen der Schicht (i) und der Schicht (ii) eine oder mehrere weitere Schichten befinden, insbesondere eine oder mehrere Primer-, Sperr- und/oder Trägerschichten.

8. Verklebungseinheit bestehend aus einem Kartenkörper, einer zumindest zweischichtigen Klebstoffolie nach einem der vorgenannten Ansprüche und einem Chipmodul.

## Claims

1. Use of an adhesive film for bonding a chip module in a card body, comprising at least two adhesive layers (i) and (ii), the at least two layers (i) and (ii) of the adhesive film differing chemically from one another.

2. Use according to claim 1, **characterized in that** the adhesives of layers (i) and/or (ii) are pressure sensitive adhesives.

3. Use according to at least one of the preceding claims **characterized in that** one layer (i) exhibits high bonding compatibility with epoxy materials and/or polyimides and the other layer (ii) exhibits high bonding compatibility with polycarbonate, polyethylene, polypropylene, acrylonitrile-butadiene-styrene copolymer plastics, polyethylene terephthalate and/or polyvinyl chloride.

4. Use according to at least one of the preceding claims **characterized in that** layer (i) is based on thermoplastic polymers, in particular based on polyesters, polyamides, copolyesters and/or copolyamides.

5. Use according to at least one of the preceding claims, **characterized in that** layer (ii) is based on polyurethanes and/or rubbers especially synthetic rubbers.

6. Use according to at least one of the preceding claims, **characterized in that** layer (ii) is based on heat-activatable systems, particularly composed of an elastomer and at least one reactive resin, in which context, in particular, rubbers, polychloroisoprenes, polyacrylates, nitrile rubbers and/or epoxidized nitrile rubbers are used as elastomer and/or phenolic resins, epoxy resins, melamine resins and/or resins with isocyanate function, alone or in combination with one another, are used as reactive resins.

7. Use according to at least one of the preceding claims, **characterized in that** between layer (i) and layer (ii) there are one or more further layers, in particular one or more primer, barrier and/or carrier layers.

8. Adhesive unit consisting of a card body, an at least two-layered adhesive film according to one of the preceding claims and a chip module.

## Revendications

1. Utilisation d'une feuille adhésive pour coller un module multipuce dans un corps de carte, comportant au moins deux couches adhésives (i) et (ii), les au moins deux couches (i) et (ii) de la feuille adhésive étant chimiquement différentes l'une de l'autre.

2. Utilisation selon la revendication 1, **caractérisée en ce que** les adhésifs des couches (i) et/ou (ii) sont des adhésifs de contact.

3. Utilisation selon au moins l'une des revendications précédentes, **caractérisée en ce que** l'une des couches (i) présente une grande compatibilité en adhérence avec les matériaux époxydiques et/ou les polyimides, et l'autre couche (ii) présente une grande compatibilité en adhérence vis-à-vis du polycarbonate, du polyéthylène, du polypropylène, des plastiques copolymères acrylonitrile-butadiène-styrène, du poly(téréphtalate d'éthylène) et/ou du poly(chlorure de vinyle).

4. Utilisation selon au moins l'une des revendications précédentes, **caractérisée en ce que** la couche (i) est à base de polymères thermoplastiques, en particulier à base de polyesters, de polyamides, de copolyesters et/ou de copolyamides.

5. Utilisation selon au moins l'une des revendications précédentes, **caractérisée en ce que** la couche (ii) est à base de polyuréthannes et/ou de caoutchoucs, en particulier de caoutchoucs de synthèse.

6. Utilisation selon au moins l'une des revendications précédentes, **caractérisée en ce que** la couche (ii) est à base de systèmes activables à la chaleur, en particulier en un élastomère et en au moins une résine réactive, auquel cas

on utilise en particulier en tant qu'élastomère des caoutchoucs, des polychloroisoprènes, des polyacrylates, des caoutchoucs nitriles et/ou des caoutchoucs nitriles époxydés, et/ou, en tant que résines réactives, des résines phénoliques, des résines époxydes, des résines de mélamine et/ou des résines comportant une fonction isocyanate, seules ou en combinaison les unes avec les autres.

**7.** Utilisation selon au moins l'une des revendications précédentes, **caractérisée en ce qu'**entre la couche (i) et la couche (ii) se trouvent une ou plusieurs couches supplémentaires, en particulier une ou plusieurs couches primaires, barrières et/ou supports.

**8.** Ensemble collé, constitué d'un corps de carte, d'une feuille adhésive comportant au moins deux couches selon l'une des revendications précédentes, et d'un module multipuce.

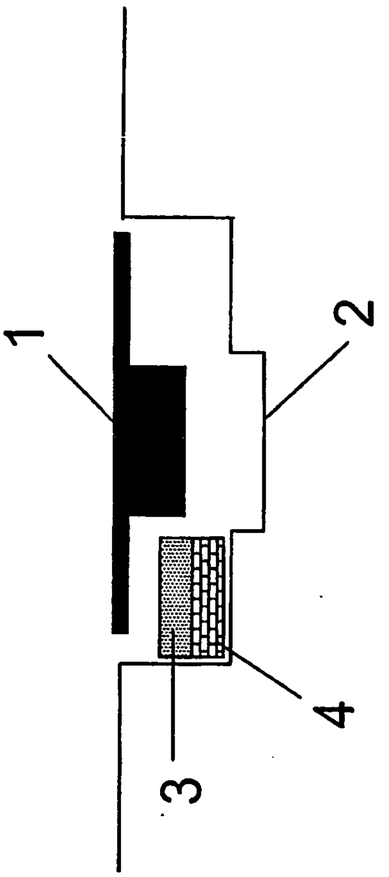


Fig. 1

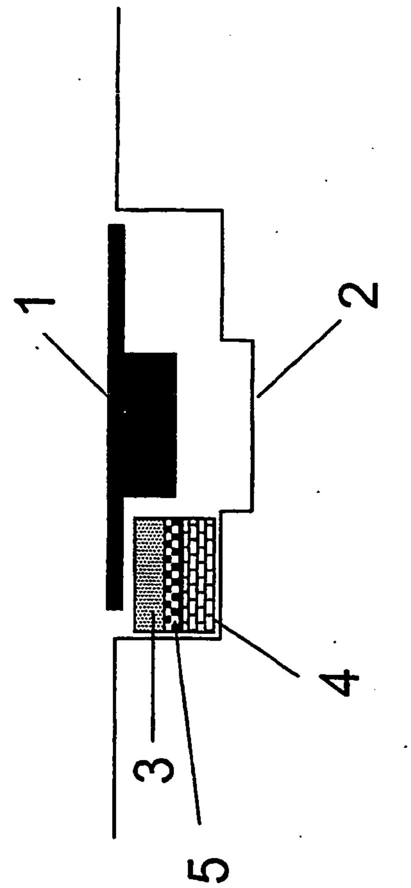


Fig 2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0842995 A
- EP 1078965 A
- DE 19948560
- US 3326741 A
- US 3639500 A
- US 4404246 A
- US 4452955 A
- US 4545843 A
- US 4880683 A
- US 5593759 A
- US 44043345 B


### In der Beschreibung aufgeführte Nicht-Patentliteratur


- **VON DONATAS SATAS.** Handbook of Pressure Sensitive Adhesive Technology. van Nostrand, 1989
- **T.G. FOX.** *Bull. Am. Phys. Soc.,* 1956, vol. 1, 123
- **SKELHORNE.** Electron Beam Processing, in Chemistry and Technology of UV and EB formulation for Coatings, Inks and Paints. SITA, 1991, vol. 1